# EUROPEAN PATENT SPECIFICATION

(11) **EP 1 750 150 B1**
(45) Date of publication and mention of the grant of the patent: **27.01.2010**
(21) Application number: 06110202.6
(22) Date of filing: 25.07.2005
(51) Int. Cl.: G02B 6/00, G02B 6/42, H04M 19/04

(54) **Shared light pipe for message indicator and light sensor of ambient light**
Koordinierung von Umgebungslichtmessung und Lichtemission
Coordination de la mesure d'une lumière ambiante et d'une émission de lumière

(43) Date of publication of application: 07.02.2007
(62) Divisional of application: 05106837.7
(73) Proprietor: Research In Motion Limited, Waterloo, Ontario N2L 3W8 (CA)
(72) Inventor: Lowles, Robert, Waterloo Ontario N2T 2J5 (CA)
(74) Representative: MERH-IP Matias Erny Reichl Hoffmann

(56) References cited:
- EP-A- 1 303 113
- WO-A-01/05125
- US-A1- 2004 208 632
- PATENT ABSTRACTS OF JAPAN vol. 2000, no. 25, 12 April 2001 (2001-04-12) -& JP 2001 215350 A (NEC CORP), 10 August 2001 (2001-08-10)
- PATENT ABSTRACTS OF JAPAN vol. 017, no. 661 (E-1471), 7 December 1993 (1993-12-07) -& JP 05 218581 A (HITACHI LTD), 27 August 1993 (1993-08-27)
- PATENT ABSTRACTS OF JAPAN vol. 009, no. 190 (P-378), 7 August 1985 (1985-08-07) -& JP 60 059548 A (NIPPON DENSHIN DENWA KOSHA), 5 April 1985 (1985-04-05)
- PATENT ABSTRACTS OF JAPAN vol. 1995, no. 11, 26 December 1995 (1995-12-26) & JP 07 203124 A (NIPPON STEEL CORP), 4 August 1995 (1995-08-04)

## Description

The following is directed in general to the measurement of ambient light and the modification of intensity of light sources in accordance therewith.

More particularly it is directed to the modification of light emission in mobile communication devices.

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones. The user interface for such devices typically includes, a keyboard, a message waiting indicator to indicate received voice or email messages, and an LCD display.

The message waiting indicator typically comprises an LED mounted to a printed circuit board (PCB) within the device and a light pipe (sometimes referred to as a light guide) for transmitting light via Total Internal Reflection (TIR) from the LED to the surface of the device, so as o be visible to the user. The circuitry within the device causes the LED to flash upon receipt of a message, thereby notifying the user. The design and operation of such circuitry would be well known to a person of skill in the art, and does not form part of the present specification.

The LCD display typically includes a backlight control device to control variable brightness or to maintain the brightness of the display. The backlight control device includes a backlight lamp mounted on the back of an LCD to emit light, a light sensor for measuring intensity of the external or surrounding light, and an A/D converter for converting an electric signal, detected and generated by the light sensor, into a digital signal for controlling the backlight lamp.

It is highly desirable to minimize the size of such mobile communication devices for enhanced portability. However, incorporation of the light sensor consumes valuable real-estate on the surface of the device, and may detract from the appearance of the device.

It is also desirable to modify the intensity of the message indicator light and the backlight in accordance with ambient light intensity. Prior art systems such as EP1303113A2 assigned to Fujitsu Limited discloses a portable terminal comprising a sensor for detecting external brightness. A control unit turns ON a key back light for lighting the operation keys and a screen light for lighting a display screen, according to the external brightness, in response to operation to the keys.

EP1696259 A1, which comprises a part of the state of the art according to Article 54(3) EPC, discloses a portable computing device having a light controller disposed within a housing of the device. An event notifier includes an event notification lamp, and a light conduit terminating at an external surface of the device for conveying light between the event notification lamp and the external surface. The light controller is coupled to the event notifier and the illumination means. The light controller is configured to determine the intensity of ambient light external to the housing via the light conduit, and to adjust the intensity of light emitted by the illumination means in accordance with the determined ambient light intensity. The light controller determines the intensity of ambient light when the event notification light is not on.

It is therefore an object of the present invention to provide a more accurate measurement.

According to one aspect of the invention as defined by claim 1, a method of operating a message light source and an ambient light sensor in a communication device having a shared light guide is provided. The shared light guide comprises a first branch for channeling light to the ambient light sensor, a second branch for channeling light from the message light source and an elongated portion having one end optically connected to said first and second branches and another end at an external surface of the communication device for receiving and transmitting light, said method comprising: flashing said message light on and off according to a predetermined pattern, wherein, according to said predetermined pattern, said message light is flashed off for a longer period of time than it is flashed on; and selectively reading an output of said light sensor exclusively when said light source is not on.

According to a second aspect of the invention as defined by claim 4, a mobile communication device communication device comprising a light source and an ambient light sensor is provided. The communication device comprises: a shared light guide, the shared light guide comprising a first branch for channeling light to the ambient light sensor, a second branch for channeling light from the light source and an elongated portion having one end optically connected to said first and second branches and another end at an external surface of the communication device for receiving and transmitting light; means for flashing said light source on and off in a predetermined pattern, said means being arranged to control the light source according to the predetermined pattern such that said light source is flashed off for a longer period of time than said light source is flashed on; and means for activating the sensor to sense light in accordance with periods of the light source not being on.

Unlike some of the prior art, the shared light pipe as disclosed herein facilitates reduced size of the mobile communication device by minimizing real-estate on the surface of the device and on the PCB because the LED and light sensor can be placed very close together.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:

Figure 1 is schematic representation of a message waiting indicator for a mobile communication device according to the prior art; and

Figure 2 is a schematic representation of a shared light pipe for message indicator and light sensor, according to the preferred embodiment.

### Description of Preferred Embodiments

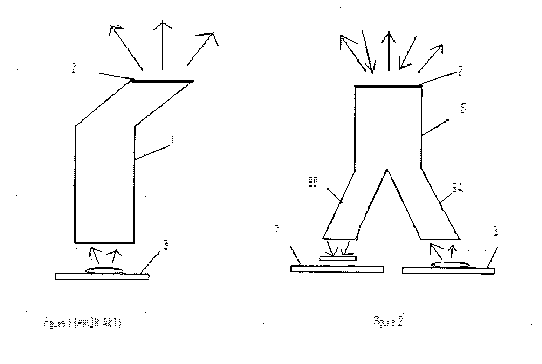

With reference to Figure 1, a prior art message waiting indicator is shown comprising a light pipe 1 for transmitting light from a message LED 3 to a viewing surface 2 flush with the surface of a mobile communication device (not shown). The light pipe 1 generally comprises an elongated transparent or translucent member having reflection surfaces. As well known in the art, when a light ray is directed from the LED 3 into the light pipe and subtends a surface of the light pipe, if the incident angle formed by the light ray and the surface is less than a critical angle, the light is reflected back into the light pipe along a trajectory that defines a reflected angle equal to the incident angle and toward an opposite surface of the guide. Provided the light pipe 1 is designed properly and light rays directed into it are directed along suitable trajectories, the light pipe facilitates total internal reflection (TIR) of the light and hence passes all of the light to the opposite end 2 of the guide for viewing by a user. As discussed above, circuitry is provided within the device for causing the LED to flash upon receipt of a message, thereby notifying the user. The electronic circuitry is not shown, but would be well known to a person of skill in the art.

As discussed above, a light sensor may also be provided for controlling the display backlight. According to the prior art, such a light sensor is separate from the message indicator and is mounted directly to the surface of the mobile communication device.

Figure 2 shows a shared light pipe 5 for transmitting light from exterior surface 2 of the device to a first internal location within the device, where the internal light sensor 7 is located, and for transmitting light from a second internal location within the device, where the message LED 3 is located, to the exterior surface 2. The shared light pipe 5 contains a pair of branches 9A and 9B. at a distal portion thereof, opposite the external viewing surface 2, where one branch 9A channels light from the LED 3, and the other branch 9B channels light to the internal light sensor 7. Thus, the light guide of figure 2 comprises a light pipe having an elongated first portion with one end at the exterior surface 2 for receiving and transmitting light, and a branching portion from which the branches 9A and 9B extend.

Preferably, the light pipe as disclosed herein, is molded from polycarbonate or acrylic, although it can alternatively be selected from bar stock.

According to the preferred embodiment of the invention, the message light LED 3, when in operation, flashes according to predetermined pattern. It is typically flashed according to the following pattern: 0.5 second on, 3 to 5 seconds off. The light sensor 7 is read by an internal processor (not shown) when the message LED 3 is off, thereby avoiding interference between generated and sensed light within the light pipe 5.

Three readings are typically recorded from light sensor 7 in order to manage the backlighting function. A self test can also be performed by illuminating the LED 3 while taking a measurement at the light sensor 7, thereby confirming the presence of both the LED 3 and sensor 7. Additionally, if the LED 3 has multiple colours then the light sensor 7 can be used to confirm that as well (a test typically performed during the device manufacturing process).

In summary, by measuring the intensity of ambient light in accordance with the emission of light from a light source, which is emitted in a predetermined pattern, the accuracy of the measurement can be enhanced. In addition, the shared light pipe set forth herein effectively facilitates reduced size of the mobile communication device by minimizing real-estate on the surface of the device and on the PCB, and also minimizes the number of light pipes required for message light display and light sensing.

A person skilled in the art, having read this description of the preferred embodiment, may conceive of variations and alternative embodiments. For example, although the preferred embodiment refers to implementation within a mobile communication device (such as a PDA, cellular phone or smart phone), it is contemplated that the shared light pipe set forth herein may also be employed to advantage within desktop telephones, pagers or other communication devices.

All such variations and alternative embodiments are believed to be within the scope of the claims appended hereto.

## Claims

1. A method of operating a message light source (3) and an ambient light sensor (7) in a communication device having a shared light guide (5, 9A, 9B), the shared light guide (5, 9A, 9B) comprising a branching portion with a first branch (9B) for channeling light to the ambient light sensor (7), a second branch (9A) for channeling light from the message light source (3) and an elongated portion with one end at an external surface (2) of the communication device for receiving and transmitting light, said method comprising:
flashing said message light on and off according to a predetermined pattern, wherein, according to said predetermined pattern, said message light is flashed off for a longer period of time than it is flashed on; and
selectively reading an output of said light sensor (7) exclusively when said light source (3) is not on.

2. The method of claim 1, wherein said light is pattern is approximately 0.5 seconds on, followed by from approximately 3 to approximately 5 seconds off.

3. The method of claim 1 or claim 2 further comprising the steps of:
receiving light at an external location (2) on the external surface of said device;
transmitting the light via the shared light guide from the external location to said light sensor (7) located at a first internal location within the device;
emitting light at a second internal location (3) within the device;
emitting light at a third internal location within the device;
monitoring the light received at the first internal location and modifying the intensity of light emitted at the third internal location in accordance with the intensity of light received at the first internal location;
further comprising the steps of:
transmitting light along a first light path (5,9b) from the external location to the first internal location; and
transmitting light along a second light path (5,9a) from the second internal location to the external location;
such that the first and second light paths are coincident over at least a part of said paths.

4. A mobile communication device comprising a light source (3) and an ambient light sensor (7), said communication device comprising:
a shared light guide (5, 9A, 9B), the shared light guide (5, 9A, 9B) comprising a branching portion with a first branch (9B) for channeling light to the ambient light sensor (7), a second branch (9A for channeling light from the light source (3) and an elongated portion arranged to have one end
at an external surface (2) of the communication device for receiving and transmitting light;
means for flashing said light source (3) on and off in a predetermined pattern, said means being arranged to control the light source (3) according to the predetermined pattern such that said light source (3) is flashed off for a longer period of time than said light source (3) is flashed on; and
means for activating the sensor (7) to sense light in accordance with periods of the light source not being on.

5. The mobile communication device of claim 4, further comprising:
an external location (2) on the external surface of said device for receiving light; said light sensor (7) being located at a first internal location within the device;
a first light source (3) located at a second internal location within the device;
a means for monitoring the output signal of the light sensor;
a first modifying means for modifying the intensity of a second light source in accordance with the intensity of light received by the light sensor (7);
wherein said light guide (5, 9A, 9B), comprises:
a first light path for conveying light from the external location (2) to the first internal location; and
a second light path for conveying light from the second internal location to the external location;
wherein the first and second light paths are coincident over at least a part of said paths.

6. The mobile communication device of claim 5 wherein the light guide further comprises a light pipe, comprising:
said first branch (9B), through which the first light path extends;
said second branch (9A) through which the second light path extends; and
said third branch for receiving and transmitting light, through which the coincident parts of the light paths extend;
wherein light is transmitted along the branches by means of total internal reflection 'TIR'.

7. The mobile communication device of claim 6, wherein said first, second and third branches are fabricated from translucent or transparent material.

8. The mobile communication device of claim 7, wherein said material is moulded from a polycarbonate or acrylic material.

9. The mobile communication device of any one of claims 4 to 8 wherein the first light source (3) is a light emitting diode 'LED'.

10. The mobile communication device of any one of claims 4 to 9 wherein the light guide comprises a generally Y-shaped light guide.

## Patentansprüche

1. Verfahren zum Betrieb einer Nachrichten-Lichtquelle (3) und eines Umgebungslichtsensors (7) in einem Kommunikationsgerät mit einem gemeinsamen Lichtleiter (5, 9A, 9B), wobei der gemeinsame Lichtleiter (5, 9A, 9B) einen Verzweigungsabschnitt mit einem ersten Zweig (9B) für die Kanalisierung von Licht zu dem Umgebungslichtsensor (7), einem zweiten Zweig (9A) für die Kanalisierung von Licht von der Nachrichten-Lichtquell (3), und einem länglichen Abschnitt mit einem Ende auf einer Auβenfläche (2) des Kommunikationsgeräts zum Empfangen und Übertragen von Licht aufweist, wobei das Verfahren aufweist:
Blinken des Nachrichten-Lichts an und aus gemäß einem vorgegebenen Muster, .. wobei gemäß dem vorgegebenen Muster das Nachrichten-Licht für eine längere zeit aus ist als es an ist; und
selektives Lesen eines Ausgangs des Lichtsensors (7) ausschließlich, wenn die Lichtquelle (3) nicht eingeschaltet ist.

2. Verfahren gemäβ Anspruch 1. wobei das Lichtmuster ungefähr 0,5 Sekunden an ist, gefolgt von ungefähr 3 bis ungefähr 5 Sekunden aus.

3. Verfahren gemäß Anspruch 1 oder Anspruch 2, das weiter die Schritte aufweist:
Empfangen von Licht an einer externen Stelle (2) auf der äußeren Oberfläche des Geräts;
Übertragen des Lichts über den gemeinsamen Lichtleiter von der äußeren Stelle zu dem Lichtsensor (7), der sich an einer ersten internen Stelle innerhalb des Geräts befindet;
Emittieren von Licht an einer zweiten internen Stelle (3) innerhalb des Geräts;
Emittieren von Licht an einer dritten internen Stelle innerhalb des Geräts;
Kontrollieren des an der ersten internen Stelle empfangenen Lichts und Verändern der intensität des Lichts, das an der dritten Stelle emittiert wird, in Übereinstimmung mit der intensität von Licht, das an der ersten internen Stelle empfangen wird;
das weiter die Schritte aufweist:
Übertragen von Licht entlang eines ersten Lichtwegs (5, 9B) von der externen Stelle an die erste interne Steiler; und
Übertragen von Licht entlang eines zweiten Lichtwegs (5,9A) von der zweiten internen Stelle an die externe Steile;
so dass die ersten und zweiten Lichtwege zumindest über einen Teil der Wege zusammenfallen.

4. Mobiles Kommunkationsgerät mit einer Lichtquelle (3) und einem Umgebungslichtsensor (7), wobei das Kommunikationsgerät aufweist:
einen gemeinsamen Lichtleiter (5, 9A, 9B), wobei der gemeinsame Lichtleiter (5, 9A, 9B) einen Verzweigungsabschitt mit einem ersten Zweig (9B) für die Kanalisierung von Licht zu dem Umgebungslichtsensor (7), einem zweiten Zweig (9A) für die Kanalisierung Von Licht von der Lichtquelle (3), und einen länglichen Abschnitt aufweist; der ausgebildet ist, ein. Ende auf einer Außenfläche (2) des kommunikationsgeräts zum Empfangen und Übertragen von Licht zu haben;
Mittel zum Blinken der Lichtquelle (3)an und aus gemäß einem Vorgegebenen Muster, wobei das Mittel ausgebildet ist,die Lichquelle(3) gemäß dem vorgegebenen Muster derart zu kontrollieren, dass die Lichtquelle (3) für eine längere Zeit aus ist als die Lichtquelle (3)an ist;und
Mittel zum Aktivieren des Sensors (7),um Licht in Übereinstimmung mit nicht eingeschalteten Zeiten der Lichtquelle zu erfassen.

5. Mobiles Kommunikationsgerät gemäß Anspruch 4, das weiter aufweist:
eine externe Stelle (2) auf der äußeren Oberfläche des Geräts zum Empfangen von Licht;
Wobei sich der Lichtsensor (7) an einer ersten internen Stelle innerhalb des Geräts befindet;
wobie sich eine erste Lichtquelle (9) an einer zweiten internen Stelle innerhalb des Geräts befindet;
ein Mittel zum Kontrolleren des Ausgabesignals des Lichtsensors;
ein erstes Änderungsmittel zur Veränderung der intensität einer zweiten Lichtquelle in Übereinstimmung mit der intensität des Lichts, das von dem Lichtsensor (7) empfangen wird;
wobei der Lichtleiter (5, 9A, 9B) aufweist;
einen ersten Lichtweg zum Leiten von Licht von der externen Stelle (2) an die erste interne Stelle; und
einen zweiten Lichtweg zum Leiten von Licht von der zweiten interne Stelle an die externe Stelle;
wobei die ersten und zweiten Lichtwege zumindest über einen Teil der Wege zusammenfallen.

6. Mobiles Kommunikationsgerät gemäß Anspruch 5, wobei der Lichtleiter weiter eine Lichtröhre aufweist, aufweisend;
den ersten Zweig (9B), durch den sich der erste Lichtweg erstreckt;
den zweiten Zweig (9A), durch den sich der zweite Lichtweg erstreckt; und
den dritten Zweig zum Empfangen und Übertragen Von Licht, durch den sich die zusammenfalenden Teile der Lichtwege erstrecken;
wobei Licht entlang der Zweige mittels einer Totalreflexion TIR (total internal reflection) übertragen wird.

7. Mobiles Kommunikationsgerät gemäß Anspruch 6, wobei die ersten, zweiten und dritten zweige aus einem transluzenten oder transparenten Material gefertigt sind.

8. Mobiles Kommunikationsgerät gemäß Anspruch 7, wobei das Material aus einem Polykarbonat- oder Acryl-Material geformt ist.

9. Mobiles Kommunikationsgerät der Ansprüche 4 bis 8, wobei die erste Lichtquelle (3) eine Leuchtdiode LED (light emitting diode) ist.

10. Mobiles Kommunikationsgerät gemäß einem der Ansprüche 4 bis 9, wobei der Lichtleiter einen im Allgemeinen Y-förmigen Lichtleiter aufweist.

## Revendications

1. Procédé de fontionnement d'une source lumineuse de messagerie (3) et d'un capteur de lumière ambiante (7) dans un dispositif de communication ayant un guide de lumière partagé (5, 9A, 9B), le guide de lumière partagé (5, 9A, 9B) comprenant une partie de branchement avec une première branche (9B) destinée à envoyer de la lumière au capteur de lumière ambiante (7), une deuxième branche (9A) destinée à envoyer la lumière de la source lumineuse de messagerie (3) et une partie allongée avec une extrémité aboutissant à une surface extérieure (2) du dispositif de communication afin de recevoir et d'émettre de la lumière, ledit procédé comprenant les étapes consistant à :
faire clignoter ladite lumière de messagerie selon un motif prédéterminé, dans lequel, selon ledit motif prédéterminé, ladite lumière de messagerie est éteinte pendant une période de temps plus longue que celle où elle est allumée; et
lire sélectivement une sortie dudit capteur de lumière (7) exclusivement lorsque ladite source lumineuse (3) n'est pas allumée.

2. Procédé selon la revendication 1, dans lequel ladite lumière est un motif est environ 0,5 seconde d'allumage, suivi par environ 3 à environ 5 secondes d'extinction.

3. Procédé selon la revendication 1 ou la revendication 2, comprenant en outre les étapes consistant à :
recevoir de la lumière en un emplacement extérieur (2) sur la surface extérieure dudit dispositif ;
transmettre la lumière à l'aide du guide de lumière partagé entre l'emplacement extérieur et ledit capteur de lumière (7) situé en un premier emplacement intérieur au sein du dispositif ;
émettre de la lumière à un deuxième emplacement intérieur (3) au sein du dispositif ;
émettre de la lumière à un troisième emplacement Intérieur au sein du dispositif ; surveiller la lumière reçue au premier emplacement intérieur et modifier l'intensité de la lumière émise au troisième emplacement intérieur en fonction de l'intensité lumineuse reçue au premier emplacement interne;
comprenant en outre les étapes consistant à :
transmettre de la lumière sur un premier trajet lumineux (5, 9b) entre l'emplacement extérieur et le premier emplacement intérieur; et
transmettre de la lumière sur un deuxième trajet lumineux (5, 9a) entre le deuxième emplacement intérieur et remplacement extérieur;
afin que le premier et le deuxième trajet lumineux coïncident sur au moins une partie desdits trajets.

4. Dispositif de communication mobile comprenant une source lumineuse (3) et un capteur de lumière ambiante (7), ledit dispositif de communication comprenant :
un guide de lumière partagé (5, 9A, 9B), le guide de lumière partagé (5, 9A, 98) comprenant une partie de branchement avec une première branche (9B) destinée à envoyer de la lumière au capteur de lumière ambiante (7), une deuxième branche (9A) destinée à envoyer la lumière de la source lumineuse (3) et une partie allongée conçue avec une extrémité aboutissant à une surface extérieure (2) du disposait de communication afin de recevoir et d'émettre de la lumière ;
un moyen destiné à faire clignoter ladite source lumineuse (3) selon un motif prédéterminé, ledit moyen étant conçu pour commander la source lumineuse (3) selon le motif prédéterminé, si bien que ladite source lumineuse (3) est éteinte pendant une période de temps plus longue que celle où elle est allumée; et
un moyen destiné à activer le capteur (7) afin de détecter la lumière en fonction des périodes pendant lesquelles la source lumineuse n'est pas allumée.

5. Dispositif de communication mobile selon la revendication 4, comprenant en outre :
un emplacement extérieur (2) sur la surface extérieure dudit dispositif, destiné à recevoir de la lumière;
ledit capteur de lumière (7) étant situé en un premier emplacement Intérieur au sein du dispositif;
une première source lumineuse (3) étant située à un deuxième emplacement intérieur au sein du dispositif ;
un moyen destiné à surveiller le signal de sortie du capteur de lumière ;
un premier moyen de modification, destiné à modifier l'intensité d'une deuxième source lumineuse en fonction de l'intensité de la lumière reçue par le capteur de lumière (7) ;
dans lequel ledit guide de lumière (5, 9A, 9B) comprend :
un premier trajet lumineux destiné à transporter de la lumière entre l'emplacement extérieur (2) et le premier emplacement intérieur; et
un deuxième trajet lumineux destiné à transporter de la lumière entre le deuxième emplacement intérieur et l'emplacement extérieur ;
dans lequel le premier et le deuxième trajet lumineux coïncident sur au moins une partie desdits trajets.

6. Dispositif de communication mobile selon la revendication 5, dans lequel le guide de lumière comprend en outre un conduit de lumière comprenant :
ladite première branche (9B), au travers de laquelle passe le premier trajet lumineux ;
ladite deuxième branche (9A), au travers de laquelle passe le deuxième trajet lumineux ; et
ladite troisième branche, destinée à recevoir et émettre de la lumière, au travers de laquelle passent les parties coïncidentes des trajets lumineux ;
dans lequel la lumière est transmise dans les branches par réflexion totale interne.

7. Dispositif de communication mobile selon la revendication 6, dans lequel lesdites première deuxième et troisième branches sont faites d'un matériau translucide ou transparent,

8. Dispositif de communication mobile selon la revendication 7, dans lequel ledit matériau est moulé à partir d'un matériau polycarbonate ou acrylique.

9. Dispositif de communication mobile selon l'une quelconque des revendications 4 à 8, dans lequel la première source lumineuse (3) est une diode électroluminescente.

10. Dispositif de communication mobile selon l'une quelconque des revendications 4 à 9, dans lequel le guide de lumière est constitué d'un guide de lumière ayant généralement la forme d'un Y.
